# EUROPEAN PATENT APPLICATION

(11) **EP 1 892 914 A2**
(43) Date of publication of application: **27.02.2008**
(21) Application number: 06026199.7
(22) Date of filing: 18.12.2006
(51) Int. Cl.: H04L 29/06, G06F 21/00

(54) **Network system, authentication method, information processing apparatus and access processing method accompanied by outbound authentication**

(30) Priority: 22.08.2006 JP 2006225806
(71) Applicant: Fujitsu Ltd., Kawasaki-shi, Kanagawa 211-8588 (JP)
(72) Inventor: Shinomiya, Daisuke, Kawasaki-shi Kanagawa 211-8588 (JP); Baba, Hidekazu, Kawasaki-shi Kanagawa 211-8588 (JP)
(74) Representative: Sunderland, James Harry

(57) **Abstract**

There is provided a network system having high security nature and excellent operability. The network system has an information provision system provided with an information provision server which provides information and a first network, an authentication system provided with an authentication server which authenticates access to the information provision server by a user using a user terminal, and a communication channel.

## Description

### BACKGROUND OF THE INVENTION

### Field of the Invention

The present invention relates to a network system, an authentication method, an information processing apparatus and access processing method accompanied by outbound authentication (authentication performed outside network).

### Description of the Related Art

Recently, with the rapid spread of a personal computer, the functions and the performance of a personal computer and a packet communication apparatus is highly enhanced. In companies, a network becomes more and more important as a tool for smoothly performing business, and important data is exchanged on a network. Therefore, security measures for protecting data in the companies are taken with the use of a security device, such as a firewall, against attacks from the outside, such as unauthorized accesses and viruses. One of such security measures that are especially given attention recently is a network authentication technique.

This network authentication is a technique for excluding unauthorized users by authenticating whether or not a user who is going to use a network is a person authorized as a valid user of the network and preventing an unauthorized user from using the network.

For example, as such a network authentication technique, there is disclosed a user authentication apparatus for authenticating a user when the user accesses, from a terminal connected to a public line network, another network connected via a router, wherein the user is authenticated with the use of authenticated user authentication information stored in the router in advance (see Japanese Patent Laid-Open No. 11-355266, for example).

However, the authentication processing disclosed in Japanese Patent Laid-Open No. 11-355266 is inbound authentication, that is, a system for performing authentication inside a network. Therefore, authentication has to be performed with the use of a network which originally could not be used until authentication is successful. Accordingly, as far as communication for authentication is concerned, it is necessary to enable the network to be used even before authentication. For example, in the case of IEEE (Institute of Electrical and Electronic Engineers) 802.1x which realizes network authentication on the Ethernet (registered trademark), a client connected to an L2-SW (layer 2 switch) can only use the communication channel to the L2-SW, and authentication is performed by the L2-SW itself sending an authentication packet received from the client to an authentication server.

As described above, when inbound authentication is performed, it is necessary not only that a server which actually performs authentication and a client are compatible with each other but also that all or a part of network equipment on the communication channel support the authentication method. Therefore, when a new authentication method appears, network equipment which has been used may not be used as it is. For example, in the case where different processing is provided in addition to authentication processing, such as the case of a quarantine system, and the entire procedure is complicated, the network equipment must be exchanged with network equipment compatible with the new authentication method.

In a conventional method, access restriction is changed before and after authentication, and there is a problem that, when it happens that a server is disabled when a user is going to use the server, it is difficult for him to find why he cannot access the server. That is, there is a problem that it is very difficult to find the real cause though a lot of causes are conceivable, such as that authentication failed, that access restriction has not been changed though authentication was successful, that the access route to the server is down, that the server concerned itself is down, and the like. Such a problem occurs because inbound authentication is performed with the use of a network the use of which originally should be restricted.

In consideration of the above situation, the present invention provides a network system, an authentication method, an information processing apparatus and access processing method accompanied by an outbound authentication, which has high security nature and excellent operability.

### SUMMARY OF THE INVENTION

The present invention has been made in view of the above circumstances and provides a network system accompanied by outbound authentication. A first network system accompanied by outbound authentication has:
an information provision system provided with a first connection port to which a user terminal operated by a user is connected, an information provision server which provides information for the user terminal and a first network which connects the first connection port and the information provision server;
an authentication system provided with a second connection port to which the user terminal is connected and which is physically different from the first connection port, an authentication server which authenticates the authorization of access to the information provision server by the user using the user terminal and a second network which connects the second connection port and the authentication server; and
a communication channel to notify the result of the authentication by the authentication system to the information provision system; wherein
the authentication system authenticates the user operating the user terminal connected to the second connection port and, if the user is a user validly authorized to access the information provision server, notifies terminal information identifying the user terminal to the information provision system via the communication channel; and
if the user terminal connected to the first connection port is a user terminal corresponding to the terminal information notified from the authentication system via the communication channel, the information provision system permits the use of the information provision server by the user terminal.

According to the first network system of the present invention, the first network on the information provision system side and the second network on the authentication system side are configured as networks independent from each other. Therefore, by performing authentication processing on the second network side, the first network can be used by a simple operation. Consequently, the load on both systems is reduced, and the systems can operate lightly. Furthermore, it is possible to increase the security level of the entire network system only by changing the authentication method in the second network to a more robust authentication method without making any change in the first network.

Here, the above authentication system may be provided with an information registration server which acquires, from a user terminal connected to the second connection port and authenticated by the authentication server as a user validly authorized to make access, terminal information identifying the user terminal and registers the terminal information as well as notifying the terminal information to the information provision system via the communication channel, measures the time elapsing after the notification and, after a predetermined time elapse, notifies inhibition instruction information instructing inhibition of the use of the information provision server by the user terminal to the information provision system via the communication channel as well as deleting record of the terminal information about the user terminal; and
the information provision system may be provided with an access apparatus which, in response to the notification of the terminal information from the authentication system, permits the use of the information provision server by the user terminal identified by the terminal information and, in response to the notification of the inhibition instruction information from the authentication system, inhibits the use of the information provision server by the user terminal identified by the inhibition instruction information.

If the first network system of the present invention is configured as described above, a more reliable network system can be constructed.

The terminal information may be information based on the MAC address of the user terminal connected to the second connection port. Here, the MAC address is identification information specific to an Ethernet (registered trademark) card of each piece of communication equipment, which is indicated by combination of a number specific to each manufacturer, managed and assigned by IEEE and a number uniquely assigned to each piece of communication equipment by the manufacturer.

If the first network system of the present invention is configured as described above, a more reliable network system can be constructed.

The terminal information may be information based on the IP address of the user terminal connected to the second connection port. Here, the IP address is an identification number allocated to each computer or piece of communication equipment connected to an IP network such as the Internet and an intranet.

If the first network system of the present invention is configured as described above, a more reliable network system can be constructed.

A second network system accompanied by outbound authentication of the present invention has:
an information provision system provided with a first connection port to which a user terminal operated by a user is connected, an information provision server which provides information for the user terminal and a first network which connects the first connection port and the information provision server; and
an authentication system provided with a second connection port to which the user terminal is connected and which is physically different from the first connection port, an authentication server which authenticates the authorization of access to the information provision server by the user using the user terminal and a second network which connects the second connection port and the authentication server; wherein
the authentication system authenticates the user operating the user terminal connected to the second connection port and, if the user is a user validly authorized to access the information provision server, delivers key information for encryption to the user terminal; and
the information provision system accepts information properly encrypted with the key information, which has been sent from the user terminal connected to the first connection port and causes the user terminal to use the information provision server.

According to the second network system of the present invention, the first network on the information provision system side and the second network on the authentication system side are configured as networks independent from each other. Therefore, by performing authentication processing on the second network side, the first network can be used by a simple operation. Consequently, the load on both systems is reduced, and the systems can operate lightly. Furthermore, it is possible to increase the security level of the entire network system only by changing the authentication method in the second network to a more robust authentication method without making any change in the first network.

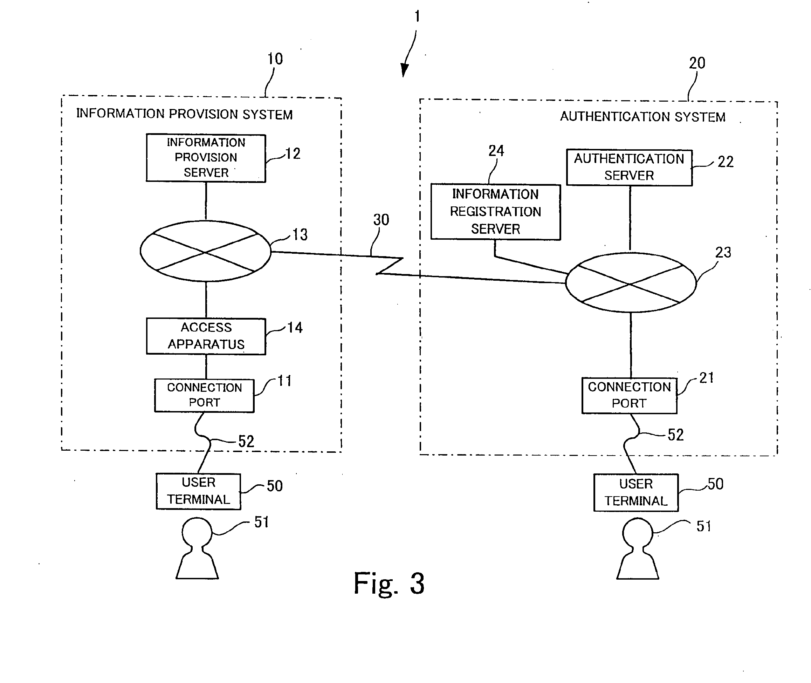

Furthermore, this second network system does not require the communication channel 30 (see Fig. 3) which is required by the first network of the present invention, and the independence of the first and second networks from each other is further strengthened.

Here, the authentication system may be provided with an information notification server which holds key information for encryption and which, in response to a request from the authentication server to perform authentication for a user validly authorized to make access, delivers the key information to the authentication server; and
the authentication servermay receive the key information from the information notification server and notify information permitting the use of the information provision system, which is accompanied by the key information, to the user terminal connected to the second connection port and authenticated as a user validly authorized to make access.

If the second network system of the present invention is configured as described above, a more reliable network system can be constructed.

Furthermore, the information provision system may be provided with an access apparatus which, if the information for accessing the information provision server sent from the user terminal connected to the first connection port is encrypted information properly encrypted with the key information, decrypts the encrypted information and communicates the information to the information provision server and, if the information is invalid information, discards the information.

If the second network system of the present invention is configured as described above, a more reliable network system can be constructed.

A third network system accompanied by outbound authentication has:
an information provision system provided with a first connection port to which a user terminal operated by a user is connected, an information provision server which provides information for the user terminal and a first network which connects the first connection port and the information provision server; and
an authentication system provided with a second connection port to which the user terminal is connected and which is physically different from the first connection port, an authentication server which authenticates the authorization of access to the information provision server by the user using the user terminal and a second network which connects the second connection port and the authentication server; wherein
the authentication system authenticates the user operating the user terminal connected to the second connection port and, if the user is a user validly authorized to access the information provision server, delivers classification information about access authorization corresponding to the classification of the user to the user terminal; and
the information provision system receives the classification information from the user terminal connected to the first connection port and permits access according to the classification information to the user terminal.

According to the third network system of the present invention, the first network on the information provision system side and the second network on the authentication system side are configured as networks independent from each other. Therefore, by performing authentication processing on the second network side, the first network can be used by a simple operation. Consequently, the load on both systems is reduced, and the systems can operate lightly. Furthermore, it is possible to increase the security level of the entire network system only by changing the authentication method in the second network to a more robust authentication method without making any change in the first network.

Furthermore, this third network system does not require the communication channel which is required by the first network of the present invention, and the independence of the first and second networks from each other can be further strengthened.

Here, the information provision system may be provided with an access apparatus which is connected to the first connection port and which receives information accompanied by the classification information, and, according to the classification information accompanying the information, causes the information to pass or discards the information.

If the third network system of the present invention is configured as described above, a more reliable network system can be constructed.

As described above, according to the present invention, since the first network can be used by a simple operation, by performing authentication processing on the second network, it is possible to realize a network system having high security nature and excellent operability.

### BRIEF DESCRIPTION OF THE DRAWINGS

Fig. 1 is a schematic configuration diagram of computer systems among which a network of each embodiment of the present invention is formed;
Fig. 2 is a hardware configuration diagram of a computer the appearance of which is shown in Fig. 1;
Fig. 3 is a schematic configuration diagram of a network system of a first embodiment of the present invention;
Fig. 4 is a diagram showing the communication sequence in the first embodiment;
Fig. 5 is a schematic configuration diagram of a network system of a second embodiment of the present invention;
Fig. 6 is a diagram showing the communication sequence in the second embodiment;
Fig. 7 is a functional block diagram of a user terminal in the second embodiment;
Fig. 8 is a functional block diagram of an access apparatus in the second embodiment;
Fig. 9 is a flowchart showing the flow of authentication processing in the second embodiment;
Fig. 10 is a diagram showing transition of an Ethernet (registered trademark) frame in the process of the authentication processing in the second embodiment;
Fig. 11 is a schematic configuration diagram of a network system of a third embodiment of the present invention;
Fig. 12 is a functional block diagram of an access apparatus in the third embodiment;
Fig. 13 is a diagram showing the IP header and the IP header option of an Ethernet (registered trademark) frame used as classification information in the third embodiment;
Fig. 14 is a diagram showing the communication sequence in the third embodiment; and
Fig. 15 is a diagram showing a policy table used as classification information in the third embodiment.

### DETAILED DESCRIPTION OF THE INVENTION

Embodiments of the present invention will be described with reference to drawings.

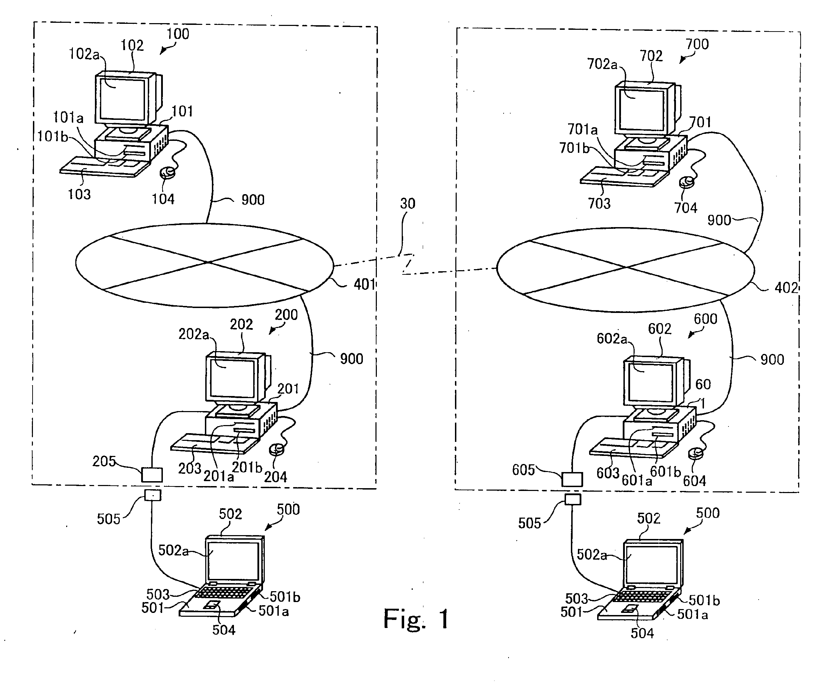

Fig. 1 is a schematic configuration diagram of computer systems among which a network of each embodiment of the present invention is formed.

The figure shows a first connection port 205 to which a user terminal 500 is connected, a first network 401 which connects a computer 100 operating as an information provision server and a computer 200 operating as an access apparatus via a LAN cable 900, a second connection port 605 to which a user terminal 500 is connected, a second network 402 which connects a computer 600 operating as an authentication server and a computer 700 operating as an information registration server or an information notification server via a LAN cable 900, and a computer 500 operating as a user terminal.

Though this system is provided with physically different two connection ports, that is, the first connection port 205 and the second connection port 605, it is not necessarily required to provide two connection ports, and such a configuration is also possible that one connection port is provided for the entire system.

Though Fig. 1 shows only one computer 100 as a computer operating as an information provision server, the number of computers operating as an information provision server is not limited to one. Multiple such computers may be provided.

LAN connectors are used as the first connection port 205 and the second connection port 605. A modular plug 505 at the tip of the LAN cable of the user terminal 500 is inserted into these connection ports.

In this embodiment, an example is described in which these two networks 401 and 402 are constructed as LANs (local area networks) in one company in which multiple computer systems are installed. However, a network system for performing processing among multiple companies, which is constructed as the Internet or a WAN (wide area network), is also possible.

The first and second networks 401 and 402 are configured as networks independent from each other. The user terminal 500 is first connected to the second network 402 to perform authentication processing. By cutting connection with the second network 402 and then connecting to the first network 401 after the authentication processing is completed, information is provided from the information provision server in the first network 401.

Fig. 1 shows a communication channel 30 for notifying the result of authentication from the second network 402 to the first network 401. However, as will be described later, only the network system of the first embodiment, among multiple networks, is provided with the communication channel 30, and the network systems of the second and third embodiments are not provided with a communication channel.

As each of the computers 100, 200, 600 and 700, a computer system which is generally referred to as a personal computer or a workstation or a blade server can be used. In the system shown in Fig. 1, a so-called notebook personal computer is used as the computer 500.

The computers 100, 200, 500, 600 and 700 are provided with a CPU (central processing unit), a RAM (random access memory), a hard disk, displays 102, 202, 502, 602 and 702 for displaying images and character strings on display screens 102a, 202a, 502a, 602a and 702a in response to an instruction from body sections 101, 201, 501, 601 and 701 in which a communication board and the like are included, keyboards 103, 203, 503, 603 and 703 for inputting a user instruction into computers 100, 200, 500, 600 and 700, mice 104, 204, 604 and 704 and a track pad 504 for, by specifying any position on the display screens 102a, 202a, 502a, 602a and 702a, inputting an instruction corresponding to an icon displayed at the position when the specification is performed.

Furthermore, on the appearance, the body sections 101, 201, 501, 601 and 701 are provided with MO mounting slots 101a, 201a, 501a, 601a and 701a and CD/DVD mounting slots 101b, 201b, 501b, 601b and 701b through which an MO (magneto-optical disk) and CD/DVD are mounted, respectively. Inside them, there is included an MO drive or a CD/DVD drive for driving and accessing an MO, a CD or a DVD mounted through the mounting slots 101a, 201a, 501a, 601a, 701a, 101b, 201b, 501b, 601b or 701b.

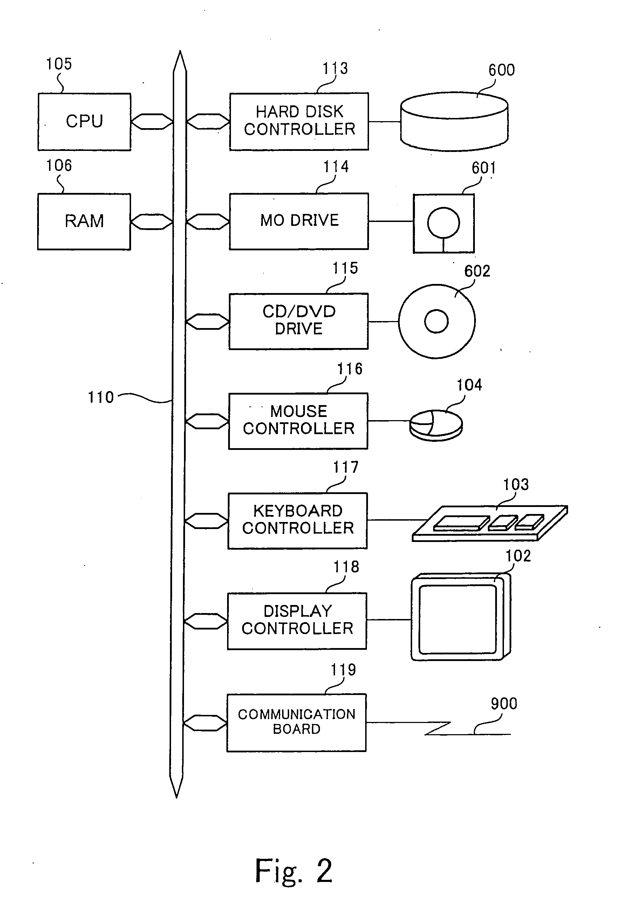

Fig. 2 is a hardware configuration diagram of the computer the appearance of which is shown in Fig. 1.

Here, the computer 100 will be representatively described. The computers 200, 500, 600 and 700 are basically have similar configuration.

The hardware configuration diagram in Fig. 2 shows a CPU 105, a RAM 106, a hard disk controller 113, an MO drive 114, a CD/DVD drive 115, a mouse controller 116, a keyboard controller 117, a display controller 118 and a communication board 119, and they are mutually connected via a bus 110.

As described with reference to Fig. 1, the MO drive 114 and the CD/DVD drive 115 access an MO and a CD/DVD mounted through the MO mounting slots 101a and the CD/DVD mounting slot 101b, respectively.

The communication board 119 is connected to the networks 401 and 402 (see Fig. 1).

Fig. 2 also shows a hard disk 600 to be accessed by the hard disk controller 113, a mouse 104 to be controlled by the mouse controller 116, a keyboard 103 to be controlled by the keyboard controller 117 and a display 102 to be controlled by the display controller 118.

Fig. 3 is a schematic block diagram of the network system of the first embodiment of the present invention.

As shown in Fig. 3, this network system 1 has an information provision system 10, an authentication system 20 and the communication channel 30.

The information provision system 10 has a first connection port 11 to which a user terminal 50 operated by a user 51 is connected, an information provision server 12 which provides information for the user terminal 50, an access apparatus 14 which permits or inhibits the use of the information provision server 12 by the user terminal 50, and a first network 13 which connects the access apparatus 14 and the information provision server 12.

Though Fig. 3 shows only one information provision server 12, the number of information provision servers is not limited to one, and multiple such information provision servers may be provided.

The authentication system 20 has a second connection port 21 to which the user terminal 50 is connected and which is physically different from the first connection port 11, an authentication server 22 which authenticates authorization of access to the information provision server 12 by the user 51 using the user terminal 50, an information registration server 24 which acquires and registers terminal information as well as notifies the terminal information to the information provision system 10 via the communication channel 30 and a second network 23 which connects the information provision server 12 and the information registration server 24.

Though a RADIUS (Remote Authentication Dial-In User Service) server, that is, a dial-up connection user authentication system of a client-server model is used as the authentication server 22 in this embodiment, the authentication server of the present invention is not limited to this RADIUS server. An authentication server adopting any method may be used if the authentication server is capable of authenticating the authorization of access to the information provision server of this network system.

The communication channel 30 is used for notifying the result of authentication by the authentication system 20 to the information provision system 10.

In this embodiment, the authentication system 20 is provided with the information registration server 24 which authenticates the user 51 operating the user terminal 50 connected to the second connection port 21 and, if the user 51 is a user validly authorized to access the information provision server 12, acquires, from the user terminal 50 connected to the second connection port 21 and authenticated by the authentication server 22 as a user validly authorized to make access, terminal information identifying the user terminal 50 and registers the terminal information as well as notifies the terminal information to the information provision system 10 via the communication channel 30.

Furthermore, the information registration server 24 of this embodiment measures the time elapsing after the notification and, after a predetermined time elapse, notifies inhibition instruction information instructing inhibition of use of the information provision server 12 by the user terminal 50, to the information provision system 10 via the communication channel 30 as well as deletes the record of the terminal information about the user terminal 50. Meanwhile, the information provision system 10 is provided with the access apparatus 14 which permits the use of the information provision server 12 by the user terminal 50 if the user terminal 50 connected to the first connection port 11 is a user terminal corresponding to the terminal information notified from the authentication system 20 via the communication channel 30, and in response to the notification of inhibition instruction information from the authentication system 20, inhibits the use of the information provision server 12 by a user terminal identified by the inhibition instruction information.

Next, the operation of the network system 1 of this embodiment will be described.

Here, description will be made, referring to Figs. 1, 3 and 4, on the case where a visitor (user) who visits a company provided with this network system 1 temporarily uses the information provision server 12 provided for this network system 1.

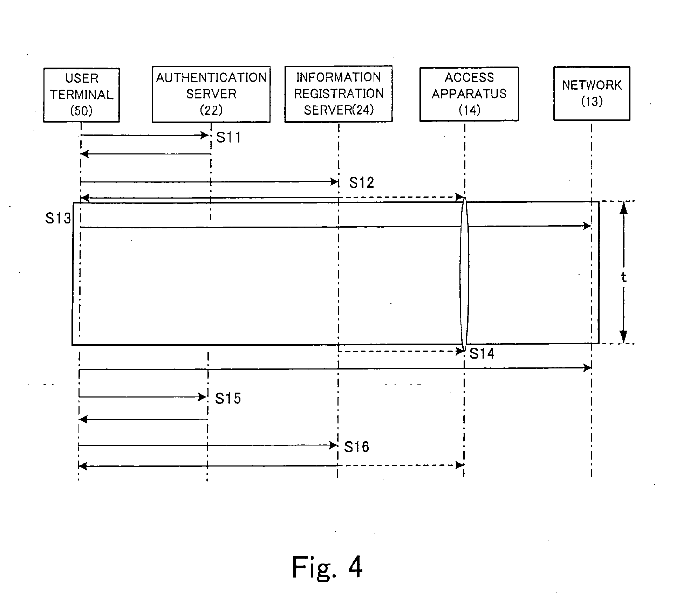

Fig. 4 is a diagram showing the communication sequence in the first embodiment.

The user 51 (see Fig. 3) visits the company provided with this network system 1 and applies to a receptionist for the use of the information provision system 10. Then, he connects a LAN cable 52 of the user terminal 50 to the LAN connector 605 of the computer 300, which is the second connection port 21 of the authentication system 20, to perform authentication processing as shown in Figs. 1 and 4 (step S11 in Fig. 4).

In this embodiment, the authentication processing is performed so that the identity of the user is authenticated with the use of the RADIUS authentication procedure by the authentication server 22. However, the identity of the user may be authenticated by any method. For example, the identity may be checked by the receptionist based on information such as the visitor's name and company name.

In this embodiment, after the authentication processing by the authentication server 22 is completed, the MAC address of the user terminal 50 is read by the authentication server 22 as terminal information identifying the user terminal 50 (step S12 in Fig. 4) and registered with the information registration server 24. Based on the registered terminal information, the information registration server 24 notifies the information provision system 10 to release access restriction on the access apparatus 14 which is to be placed at the place to be visited by the user 51 (for example, a meeting room or a reception room) via the communication channel 30 as well as notifies the same to the user terminal 50.

The access apparatus 14 is basically in the access refusal state, and it permits access by a user terminal from which access restriction is to be released only when it receives the notification to release the access restriction, from the information registration server 24.

In this embodiment, use permission time information is held in the information registration server 24 based on the time when a user visits, and the access restriction is released and re-imposed based on the use permission time information.

After the authentication processing by the authentication system 20 ends, the user 51 cuts the LAN connection between the second connection port 21 of the second network 23 and the user terminal, moves to the visiting place (a meeting room or a reception room) and makes LAN connection between the connection port 11 of the first network 13 and the user terminal to start the use of the first network 13.

As described above, the access apparatus 14 compares the terminal information received from the information registration server 24 with the terminal information received from the user terminal 50 with each other, and, if they correspond to each other, then it enables the use by the user terminal 50. Due to the above configuration, when using the first network 13 with the user terminal 50, the user 51 can use the information provision system 10 without making special settings or performing special operations at the visiting place (step S13 in Fig. 4).

As shown in Fig. 4, after the use permission time t (see Fig. 4) has elapsed, the information registration server 24 instructs the access apparatus 14 to impose the access restriction again (step S14 in Fig. 4). After the access restriction instruction is issued, the user 51 cannot use the first network 13 any more. When the user 51 wants to use the first network 13 again, he has to reconnect the user terminal 50 to the second network 23 to perform the procedure for re-authentication and re-registration by the authentication system 20 (steps S15 and S16 in Fig. 4).

As described above, the authentication processing is not performed in the information provision system 10 on the first network 13 but performed by the authentication system 20 on the second network 23, in this network system 1. Thus, a user authenticated by the authentication system 20 can use the information provision server 12 in the first network 13.

In the above description, the case of using the MAC address of the user terminal 50 as the terminal information is shown as an example. However, information based on the IP address (unique identification information allocated to a computer or a piece of communication equipment connected to an I P network such as the Internet and an intranet) of the user terminal 50 may be used instead of the MAC address. Additionally, any information can be used as the terminal information as appropriate if the information can identify a user terminal to be authenticated or information specific to the user terminal.

Such configuration is also possible that, when it is desired to lengthen the time to use the user terminal 50, authentication can be performed on the first network 13 as far as the authentication is re-authentication. In this case, however, it is necessary that the authentication sever and the information registration server also exist on the first network 13, and that synchronization of data must be taken with the second network 23, which is the original authentication network.

As described above, in this network system 1 of the first embodiment, the authentication processing is not performed on the first network 13, and only a user authenticated on the second network 23 can use the information provision server 12 in the first network 13.

Next, a second embodiment of the present invention will be described.

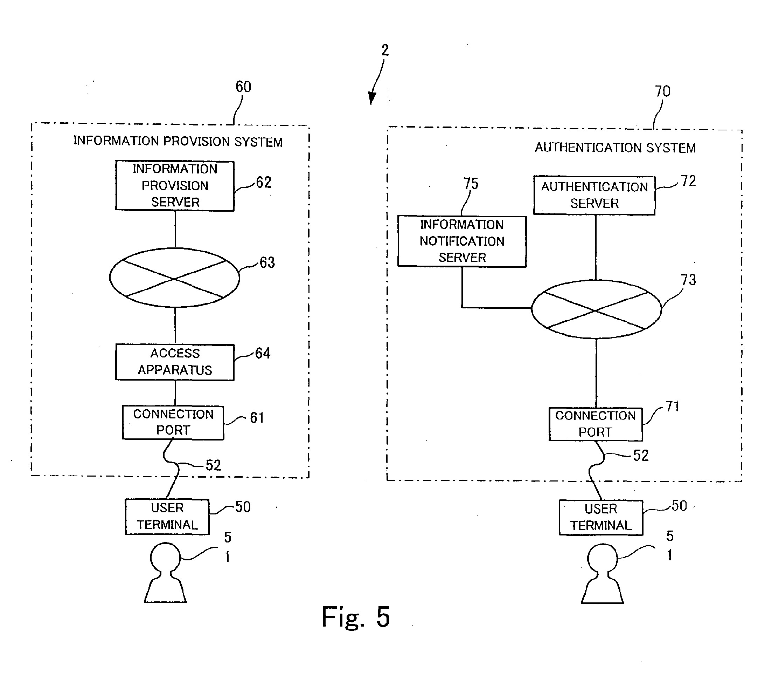

Fig. 5 is a schematic configuration diagram of a network system of a second embodiment of the present invention.

This network system2 of the second embodiment corresponds to the second network system of the present invention accompanied by outbound authentication.

As shown in Fig. 5, the network system 2 of this embodiment has an information provision system 60 and an authentication system 70.

The information provision system 60 has a first connection port 61 to which a user terminal 50 operated by a user 51 is connected, an information provision server 62 which provides information for the user terminal 50 and a first network 63 which connects the first connection port 61 and the information provision server 62.

The authentication system 70 has a second connection port 71 to which the user terminal 50 is connected and which is physically different from the first connection port 61, an authentication server 72 which authenticates authorization of access to the information provision server 62 by the user 51 using the user terminal 50 and a second network 73 which connects the second connection port 71 and the authentication server 72.

This authentication system 70 authenticates the user 51 operating the user terminal 50 connected to the second connection port 71 and, if the user 51 is a user validly authorized to access the information provision server 62, delivers key information for encryption to the user terminal 50. Furthermore, the information provision system 60 is provided with an access apparatus 64 which, if information for accessing the information provision server 62 which has been sent from the user terminal 50 connected to the first connection port 61 is encrypted information properly encrypted by the key information, enables the information provision server 62 to be used by the user terminal 50 by decrypting the encrypted information and communicating it to the information provision server 62, and discards the information if it is invalid information.

Furthermore, in this embodiment, the authentication system 70 is provided with an information notification server 75 which holds key information for encryption and delivers the key information to the authentication server 72 in response to a request from the authentication server 72 which authenticates whether a user is validly authorized to make access. The authentication server 72 is adapted to receive the key information from the information notification server 75 and notify information to permit the use of the information provision system 60, which is accompanied by the key information, to the user terminal 50 which is connected to the second connection port 71 and which has been authenticated as a user validly authorized to make access.

Next, the operation of the network system 2 of this embodiment will be described.

Here, description will be made, referring to Figs. 1, 5, and 6, on the case where a visitor (user) who visits a company provided with this network system 2 temporarily uses the information provision server 62 provided for this network system 2.

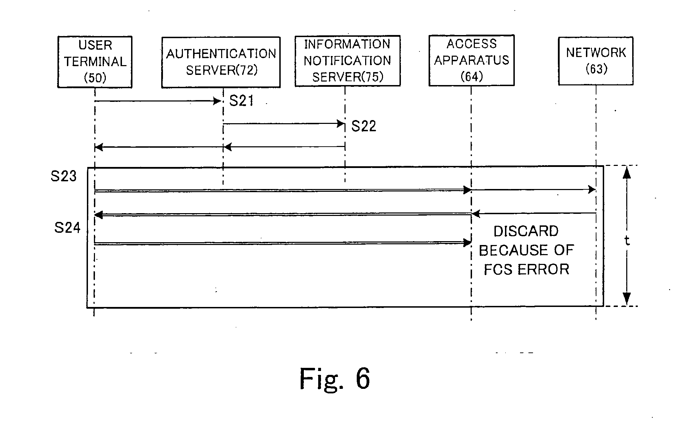

Fig. 6 is a diagram showing the communication sequence in the second embodiment.

The user 51 (see Fig. 5) visits the company provided with this network system 2 and applies to a receptionist for the use of the information provision system 60. Then, he connects the LAN cable 52 of the user terminal 50 to the LAN connector 605 of the computer 600, which is the second connection port 71 of the second network 73, to perform authentication processing as shown in Figs. 1 and 6 (step S21 in Fig. 6).

In this embodiment, the authentication processing is performed so that the identity of the user is authenticated with the use of the RADIUS authentication procedure by the authentication server 72. However, the identity of the user may be authenticated in any method. For example, the identity may be checked by the receptionist based on information such as the visitor's name and the company name.

In this embodiment, after the authentication processing by the authentication server 72 is completed, the information notification server 75 delivers the key information for encryption to the user terminal 50 (step S22 in Fig. 6). The information notification server 75 does not control the access apparatus 64 and the like in the second network 63 unlike the information registration server 24 in the first embodiment. Furthermore, the notified key information for encryption is effective information only within the use permission time t (see Fig. 6), and access restriction is released and re-imposed based on the information.

After the authentication processing by the authentication system 70 ends and the user 51 receives the key information for encryption from the authentication server 72, the user 51 cuts the LAN connection with the second connection port 71 of the second network 73, moves to a visiting place (a meeting room or a reception room), and makes LAN connection with the first connection port 61 of the first network 63 to start the use of the first network 63 (step 23 in Fig. 6).

Thus, the user 51 can use the information provision system 60 in the first network 63 without making special settings or performing special operations at this visiting place. However, the user has to perform an operation of making settings for the user terminal 50 in advance so that he can use the key information for encryption delivered from the information notification server 75. Specifically, this setting operation means to store the key information for encryption in a key information holding section 50g of the user terminal 50, as shown below. What kind of setting operation is actually required depends on the access control function on the network side. In this embodiment, description will be made on the case where a method of converting a destination MAC address to key information for encryption is used.

In this embodiment, information to be encrypted is, for example, a destination MAC address described in the Ethernet (registered trademark) header of each packet in the TCP/IP (Transmission Control Protocol/Internet Protocol).

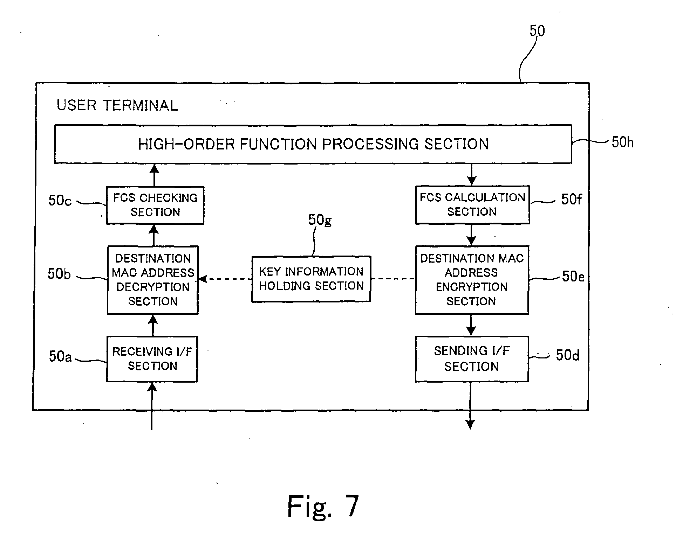

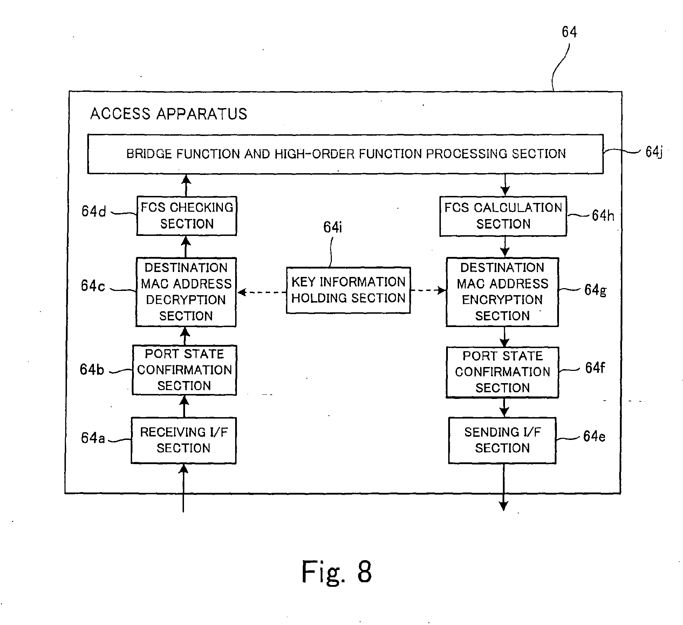

Fig. 7 is a functional block diagram of the user terminal in the second embodiment, and Fig. 8 is a functional block diagram of the access apparatus in the second embodiment.

As shown in Fig. 7, this user terminal 50 has a receiving I/F (interface) section 50a, a destination MAC address decryption section 50b, an FCS (Frame Check Sequence) checking section 50c, a sending I/F section 50d, a destination MAC address encryption section 50e, an FCS calculation section 50f, a high-order function processing section 50h and the like. Here, an FCS (abbreviation of Frame Check Sequence) is a value for detecting whether or not there is any error in the header portion and the data portion of an Ethernet (registered trademark) frame and added to the end of the Ethernet (registered trademark) frame.

As shown in Fig. 8, this access apparatus 64 has a receiving I/F (interface) section 64a, a port state confirmation section 64b, a destination MAC address decryption section 64c, an FCS checking section 64d, a sending I/F section 64e, a port state confirmation section 64f, a destination MAC address encryption section 64g, an FCS calculation section 64h, a key information holding section 64i, a bridge function and high-order function processing section 64j and the like.

Next, the flow of the authentication processing in the second embodiment will be described.

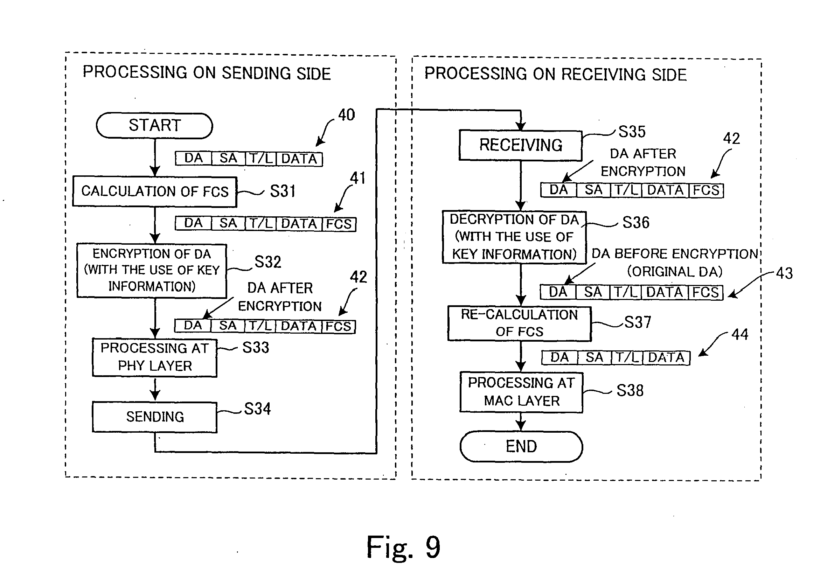

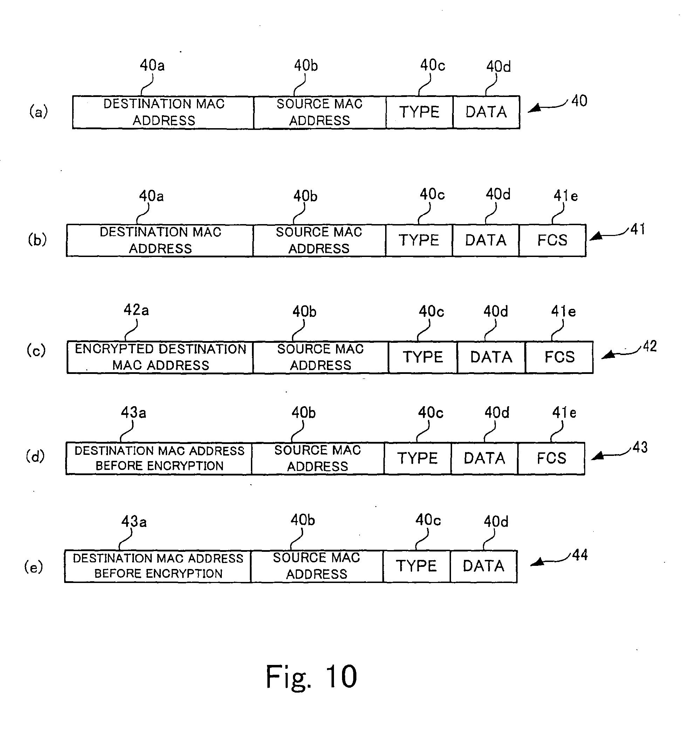

Fig. 9 is a flowchart showing the flow of the authentication processing in the second embodiment, and Fig. 10 shows transition of an Ethernet (registered trademark) frame in the process of the authentication processing in the second embodiment.

As shown Part (a) of Fig. 10, an Ethernet (registered trademark) frame 40 is configured by a destination MAC address 40a, a source MAC address 40b, a type 40c and data 40d.

After the user terminal 50 receives a MAC address from the access apparatus 64, the FCS calculation section 50f (see Fig. 7) of the user terminal 50 calculates an FCS based on the destination MAC address 40a at step S31 in Fig. 9. The FCS obtained by the calculation is added to the end of the Ethernet (registered trademark) frame 40 as shown in Part (b) of Fig. 10, and an Ethernet (registered trademark) frame 41 is generated.

Next, the destination MAC address 40a is encrypted by the destination MAC address encryption section 50e with the use of the key information for encryption described before (step S32 in Fig. 9), and an Ethernet (registered trademark) frame 42 including an encrypted destination MAC address 42a is generated as shown in Part (c) of Fig. 10.

Next, the processing at the PHY layer (the first layer (physical layer) of the OSI reference model) is performed (step S33 in Fig. 9), and an Ethernet (registered trademark) frame 42 including the encrypted destination MAC address 42a is sent from the sending I/F section 50d as key information for encryption (step S34 in Fig. 9). The key information for encryption is held in the user terminal the key information holding section 50g.

The Ethernet (registered trademark) frame 42 sent from the user terminal 50 in this way is inputted from the receiving I/F section 64a of the access apparatus 64 (see Fig. 8) (step S35 in Fig. 9). At the port state confirmation section 64b, it is confirmed whether or not the receiving port is a target port for which destination MAC address conversion is to be performed. If the port is a target port, then at the destination MAC address decryption section 64c, the encrypted destination MAC address 42a is decrypted to generate an Ethernet (registered trademark) frame 43 which includes a destination MAC address before encryption 43a (step S36 in Fig. 9). Next, recalculation of the FCS is performed at the FCS checking section 64d. If there is no error, that is, if it is confirmed that the destination MAC address before encryption 43a is the same as the encrypted destination MAC address 42a (see Part (c) of Fig. 10) (step S37 in Fig. 9), then operations of relaying the frame and the like are performed after the processing at the MAC layer (step S38 in Fig. 9).

Here, if a user terminal 50 which does not have proper key information for encryption sends improper key information for encryption to the access apparatus 64, then it is not sent to the information provision server 62 (see Fig. 5), which is a correct destination, because the destination MAC address is converted to another destination MAC address. The calculation of an FCS is not performed correctly, the frame is discarded as an error frame.

Even if a user terminal 50 which does not have proper key information for encryption happens to send key information for encryption which includes an encrypted destination MAC address to the access apparatus 64, the frame is discarded as an error frame because the FCS of the Ethernet (registered trademark) frame is not correctly calculated (step S24 in Fig. 6).

Next, a third embodiment of the present invention will be described.

As described above, a method of performing authentication by converting a destination MAC address to key information is adopted in the second embodiment. Additionally, as another authentication method, an authentication method can be adopted in which only access by a frame or packet with particular information added is permitted, with the use of a method of adding particular information to the IP header option or the VLAN (Virtual LAN) tag of an Ethernet (registered trademark) frame or a method of adding particular information in XML to a packet to perform communication.

Description will be made below on the authentication method of adding particular information to the IP header option of an Ethernet (registered trademark) frame as a third embodiment.

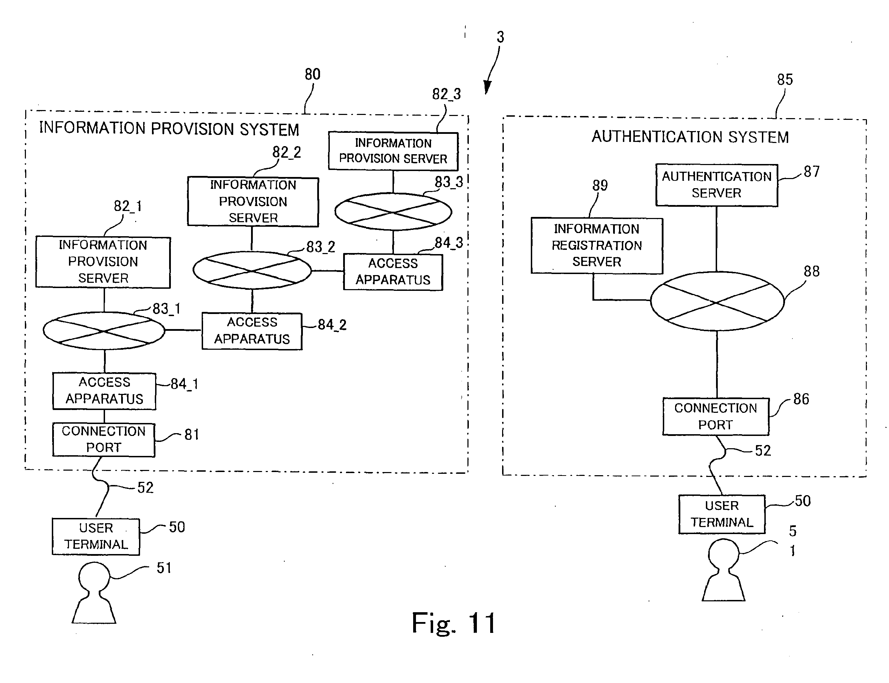

Fig. 11 is a schematic diagram of a network system of the third embodiment of the present invention.

This network system 3 of the third embodiment corresponds to the third network system of the present invention accompanied by outbound authentication.

As shown in Fig. 11, this network system 3 of the third embodiment has an information provision system 80 provided with a first connection port 81 to which a user terminal 50 operated by a user 51 is connected, information provision servers 82_1, 82_2 and 82_3 which provide information for the user terminal 50 and first sub-networks 83_1, 83_2 and 83_3 which connect the first connection port 81 and the information provision servers 82_1, 82_2 and 82_3; and an authentication system 85 provided with a second connection port 86 to which the user terminal 50 is connected and which is physically different from the first connection port 81, an authentication server 87 which authenticates the authorization of access to the information provision servers 82_1, 82_2 and 82_3 by the user 51 using the user terminal 50, and a second network 88 which connects the second connection port 86 and the authentication sever 87.

The authentication system 85 authenticates the user 51 operating the user terminal 50 connected to the second connection port 86 and, if the user 51 is a user validly authorized to access the information provision servers 82, delivers classification information about access authorization according to the classification of the user 51, to the user terminal 50. The information provision system 80 is provided with access apparatuses 84_1, 84_2 and 84_3 which are connected to the first connection port 81 and which receive information accompanied by the classification information, and cause the information to pass or discard the information based on the classification information accompanying the information. The access by the user terminal 50 is controlled by these access apparatuses 84_1, 84_2 and 84_3.

This network system 3 is hierarchically configured by three access apparatuses, three sub-networks and three information provision servers as described above. This is because the three access apparatuses 84_1, 84_2 and 84_3 receive information accompanied by classification information, and cause the information to pass or discard the information based on the classification information accompanying the information. For example, it is conceivable that the first access apparatus 84_1 permits a user with the first-rank classification information (for example, a general visitor) to access the information provision server 82_1 requiring the first-stage confidentiality and the second access apparatus 84_2 permits a user with the second-rank classification information (for example, an employee of the company) to access the information provision server 82_2 requiring the second-stage confidentiality so that authorization of access by the user terminal 50 can be controlled according to the classification of the user.

Fig. 11 shows an example of configuration of a three-layer network. However, the number of layers is not limited to three, and any number of layers is possible.

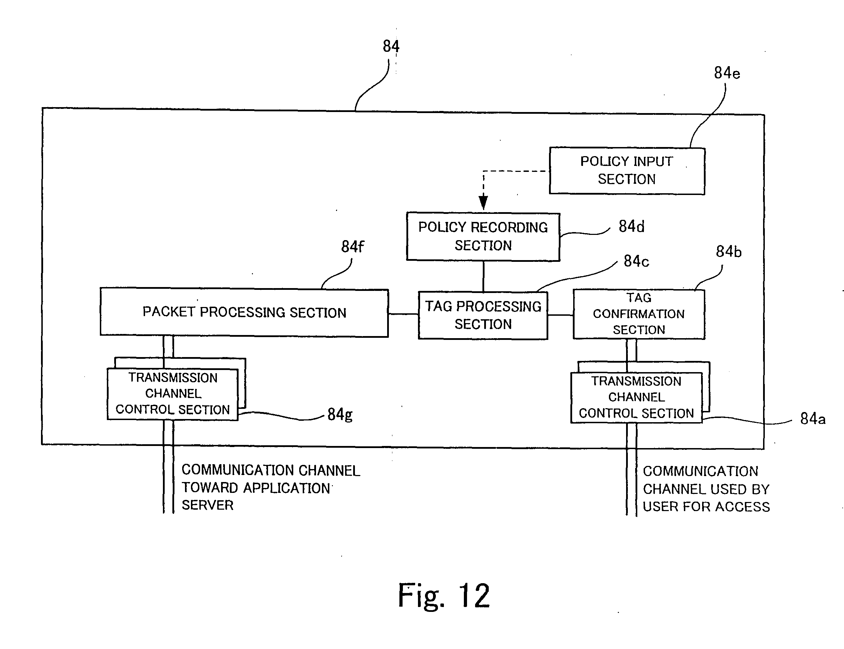

Fig. 12 is a functional block diagram of an access apparatus in the third embodiment.

Though Fig. 12 shows only an access apparatus 84 among the access apparatuses 84_1, 84_2 and 84_3, all of the three access apparatuses 84_1, 84_2 and 84_3 are similarly configured.

This access apparatus 84 has a transmission channel control section 84a, a tag confirmation section 84b, a tag processing section 84c, a policy recording section 84d, a policy input section 84e, a packet processing section 84f, a transmission channel control section 84g and the like.

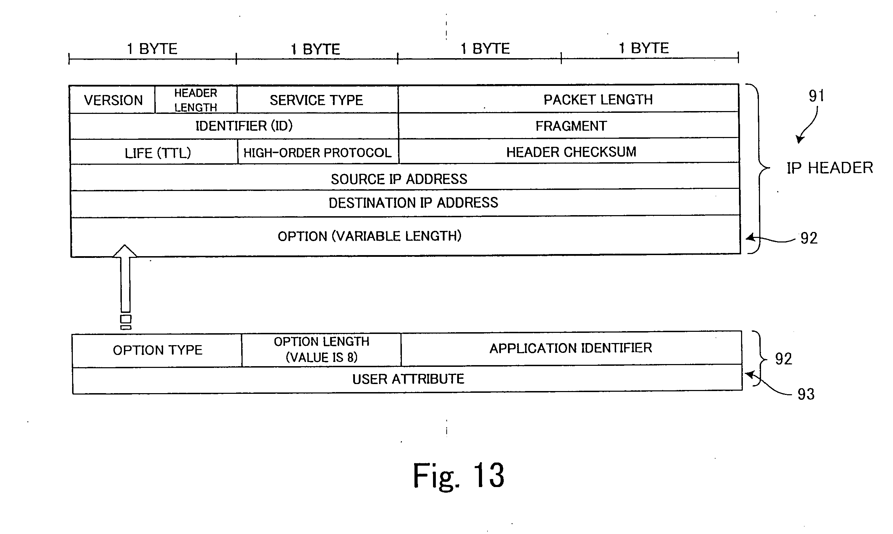

Fig. 13 is a diagram showing the IP header and the IP header option of an Ethernet (registered trademark) frame used as classification information in the third embodiment.

As shown in Fig. 13, a variable length IP header option 92 is provided in an IP header 91 of this Ethernet (registered trademark) frame, and a user attribute 93 indicating the attribute of a user is recorded in this IP header option 92.

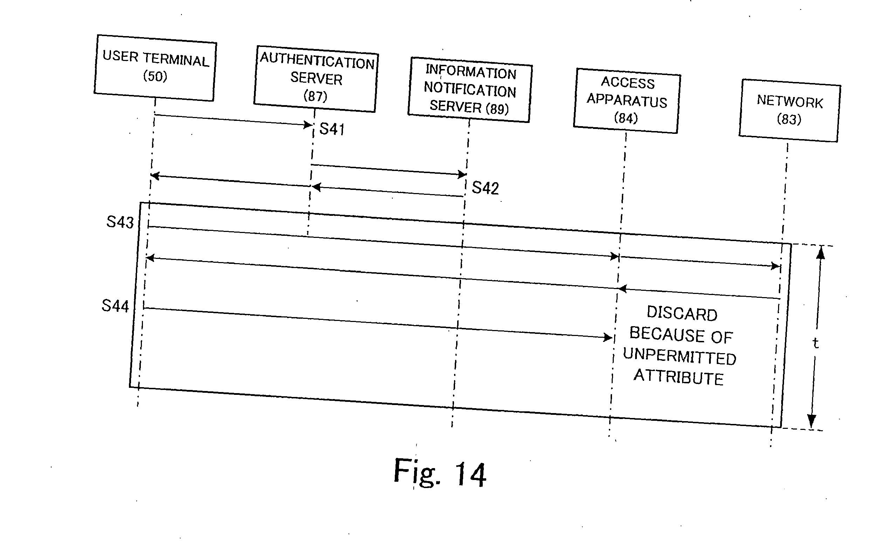

This user attribute 93 is information given by the authentication server 87 when the identity of the user 51 is authenticated by the authentication system 85. For example, "1" is given as the user attribute 93 if the user is a general visitor, and "2" is given as the user attribute 93 if the user is an employee of the company. The user attribute 93 is referred to when packet processing (see Fig. 14) is performed by the access apparatus 84 and used for determination on whether to cause a packet to pass or discard the packet as described later.

The user attribute 93 corresponds to an example of the classification information stated in the present invention.

Next, the authentication processing and the processing performed after authentication in the third embodiment will be described.

Fig. 14 is a diagram showing the communication sequence in the third embodiment.

By the user 51 (see Fig. 11) visiting a company provided with this network system 3, applying to a receptionist for the use of the information provision system 80, and connecting the LAN cable 52 of the user terminal 50 to the LAN connector 205 of the computer 300, which is the second connection port 86 of the authentication system 85, as shown in Figs. 1 and 11, the authentication processing by the authentication server 87 is started (step S41 in Fig. 14).

In this embodiment, the authentication processing is performed so that the identity of the user is authenticated with the use of the RADIUS authentication procedure. However, the identity of the user may be authenticated in any method. For example, the identity may be checked by the receptionist based on information such as the visitor's name and company name.

In this embodiment, there is provided a user database in which information about attributes of users who use this information provision system 80 is recorded. The authentication system 85 uses this user database to authenticate the user 51 operating a user terminal 50 connected to the second connection port 86. If the user 51 is a user validly authorized to access the information provision server 82, as a result of the authentication processing, then an information notification server 89 provided for the authentication system 85 sets classification information about access authorization according to the classification of the user 51 for the user terminal 50 based on the user database and notifies it to the user terminal 50 (step S42 in Fig. 14).

The notified information is the user attribute 93 in the IP header option 92 shown in Fig. 13. This classification information is notified as information which is effective only within the use permission time t (see Fig. 14).

After the authentication processing by the authentication system 85 ends and the user 51 receives the user attribute 93 to the user terminal 50 as classification information from information notification server 89, the user 51 cuts the LAN connection with the second connection port 86, moves to a visiting place (a meeting room or a reception room), makes LAN connection with the first connection port 81 and sends the user attribute 93 (see Fig. 13) to the first access apparatus 84_1 (see Fig. 11) (step S43 in Fig. 14). In the description below, the first access apparatus 84_1 will be simply referred to as an access apparatus 84 in order to avoid complication of the description.

The access apparatus 84 confirms the user attribute 93 (see Fig. 13), which is tag information of the IP header option 92 from a packet sent from the user terminal 50 by the tag confirmation section 84b (see Fig. 12), and it discards the packet if it is not given a user attribute 93 and sends the packet to the tag processing section 84c if it is given a user attribute 93. The tag processing section 84c identifies whether or not the packet is a packet which may be transferred ahead. In the policy recording section 84d, a policy table for performing the identification is recorded.

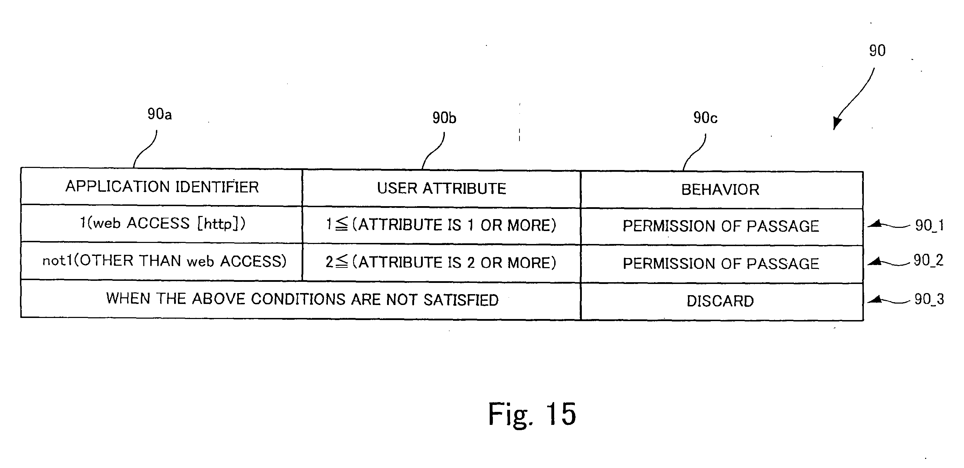

Fig. 15 is a diagram showing a policy table used as classification information in the third embodiment.

As shown in Fig. 15, an application identifier 90a, a user attribute 90b and a behavior 90c are held in this policy table 90. For example, it is specified that access by a user with a user attribute of 90b≥1 is permitted for the application of the application identifier 90a: "1 (Web access [http])" (record 90_1), that access by a user with a user attribute of 90b≥2 is permitted as for the application of the application identifier 90a: "not1 (other than Web access" (record 90_2), and that, as for a packet whose application identifier 90a and user attribute 90b do not satisfy the above conditions, the packet is to be discarded (record 90_3).

The tag processing section 84c determines how it performs processing as the access apparatus 84 with reference to the behavior 90c by checking the user attribute 93 sent from the user terminal 50 against the user attribute 90b held in the policy table 90. Based on the determination, the packet processing section 84f causes the sent packet to pass or discards the packet (S44 in Fig. 14). After the packet sent from the user terminal 50 passes through the packet processing section 84f, the user terminal 50 can start the use of the first network 83.

For example, description will be made on the case where a user attribute "1" is handed to a user terminal 50, for a user classified as "a general visitor" in the authentication system 85 (see Fig. 11). The user attribute "1" sent from the user terminal 50 is checked against the policy table 90. Since the user attribute corresponds to the user attribute 90b of the record 90_1, access to the first information provision server 82_1 which provides a Web access [http] application is permitted. However, the user attribute "1" of this user does not correspond to the user attribute 90b of the record 90_2. Therefore, access to the second and third information provision servers 82_2 and 82_3 is refused in accordance with the condition of the record 90_3.

As described above, by adding classification information according to on the classification of a user, to the IP header option, it is possible to control the use of each sub-network on the first network according to the classification of users.

In this third embodiment also, the user 51 can use the information provision server 82 within the first network 83 without making special settings or performing special operations at a visiting place after being authenticated within the second network 88.

As shown in the above three embodiments, by separating a first network including an information provision system and a second network including an authentication system from each other, it is possible to use the information provision system without making special settings or performing special operations within the first network. As a result, both of the first and second networks can be simple network systems, and thereby, processing on the first network can be performed lightly. When a new authentication method appears, it is possible to increase the security level of the entire network system only by changing the authentication method in the second network to the new authentication method without making any change in the first network. Furthermore, the problem of the prior-art inbound authentication, that is, a trouble caused due to equipment difference is not eliminated, and an integrated equipment-independent authentication system can be realized.

## Claims

1. A network system accompanied by outbound authentication, comprising:
an information provision system provided with a first connection port to which a user terminal operated by a user is connected, an information provision server which provides information to the user terminal and a first network which connects the first connection port and the information provision server;
an authentication system provided with a second connection port to which the user terminal is connected and which is physically different from the first connection port, an authentication server which authenticates authorization of access to the information provision server by the user using the user terminal and a second network which connects the second connection port and the authentication server; and
a communication channel to notify the result of the authentication by the authentication system to the information provision system,
wherein:
the authentication system authenticates the user operating the user terminal connected to the second connection port and, if the user is a user validly authorized to access the information provision server, notifies terminal information identifying the user terminal to the information provision system via the communication channel; and
if the user terminal connected to the first connection port is a user terminal corresponding to the terminal information notified from the authentication system via the communication channel, the information provision system permits use of the information provision server by the user terminal.

2. The network system accompanied by outbound authentication according to claim 1,
wherein:
the authentication system is provided with an information registration server which acquires, from a user terminal connected to the second connection port and authenticated by the authentication server as a user validly authorized to make access, terminal information identifying the user terminal and registers the terminal information as well as notifies the terminal information to the information provision system via the communication channel, measures the time elapsing after the notification and, after a predetermined time elapse, notifies inhibition instruction information instructing inhibition of the use of the information provision server by the user terminal to the information provision system via the communication channel as well as deletes record of the terminal information about the user terminal; and
the information provision system is provided with an access apparatus which, in response to the notification of the terminal information from the authentication system, permits the use of the information provision server by the user terminal identified by the terminal information and, in response to the notification of the inhibition instruction information from the authentication system, inhibits the use of the information provision server by the user terminal identified by the inhibition instruction information.

3. The network system accompanied by outbound authentication according to claim 1, wherein the terminal information is information based on the MAC address of the user terminal connected to the second connection port.

4. The network system accompanied by outbound authentication according to claim 1, 2 or 3, wherein the terminal information is information based on the IP address of the user terminal connected to the second connection port.

5. A network system accompanied by outbound authentication comprising:
an information provision system provided with a first connection port to which a user terminal operated by a user is connected, an information provision server which provides information for the user terminal and a first network which connects the first connection port and the information provision server; and
an authentication system provided with a second connection port to which the user terminal is connected and which is physically different from the first connection port, an authentication server which authenticates the authorization of access to the information provision server by the user using the user terminal and a second network which connects the second connection port and the authentication server,
wherein:
the authentication system authenticates the user operating the user terminal connected to the second connection port and, if the user is a user validly authorized to access the information provision server, delivers key information for encryption to the user terminal; and
the information provision system accepts information properly encrypted with the key information, which has been sent from the user terminal connected to the first connection port and causes the user terminal to use the information provision server.

6. The network system accompanied by outbound authentication according to claim 5,
wherein:
the authentication system is provided with an information notification server which holds key information for encryption and which, in response to a request from the authentication server to perform authentication for a user validly authorized to make access, delivers the key information to the authentication server; and
the authentication server receives the key information from the information notification server and notifies information permitting the use of the information provision system, which is accompanied by the key information, to the user terminal connected to the second connection port and authenticated as a user validly authorized to make access.

7. The network system accompanied by outbound authentication according to claim 5 or 6, wherein the information provision system is provided with an access apparatus which, if the information for accessing the information provision server sent from the user terminal connected to the first connection port is encrypted information properly encrypted with the key information, decrypts the encrypted information and communicates the information to the information provision server and, if the information is invalid information, discards the information.

8. A network system accompanied by outbound authentication comprising:
an information provision system provided with a first connection port to which a user terminal operated by a user is connected, an information provision server which provides information for the user terminal and a first network which connects the first connection port and the information provision server; and
an authentication system provided with a second connection port to which the user terminal is connected and which is physically different from the first connection port, an authentication server which authenticates the authorization of access to the information provision server by the user using the user terminal and a second network which connects the second connection port and the authentication server,
wherein:
the authentication system authenticates the user operating the user terminal connected to the second connection port and, if the user is a user validly authorized to access the information provision server, delivers classification information to the user terminal about access authorization corresponding to the classification of the user; and
the information provision system receives the classification information from the user terminal connected to the first connection port and permits access according to the classification information to the user terminal.

9. The network system accompanied by outbound authentication according to claim 8, wherein the information provision system is provided with an access apparatus which is connected to the first connection port and which receives information accompanied by the classification information, and, according to the classification information accompanying the information, causes the information to pass or discards the information.

10. An authentication method for authenticating access to a third information processing apparatus by a second information processing-apparatus, at a first information processing apparatus, the method comprising the steps of:
sending out a request to access the third information processing apparatus, from the second information processing apparatus to the first information processing apparatus;
authenticating the access by the second information processing apparatus, at the first information processing apparatus;
sending out first information from the second information processing apparatus toward the first information processing apparatus according to the result of the access authentication;
sending out the first information from the second information processing apparatus to the third information processing apparatus;
sending out second information from the second information processing apparatus to the third information processing apparatus;
determining correspondence relation between the first information and the second information, at the third information processing apparatus; and
permitting the use of the third information processing apparatus by the second information processing apparatus based on the result of the correspondence relation determination.

11. An authentication method for authenticating access to a third information processing apparatus by a second information processing apparatus, at a first information processing apparatus, the method comprising the steps of:
sending out a request to access.the third information processing apparatus, from the second information.processing apparatus to the first information processing apparatus;
authenticating the access by the second information processing apparatus, at the first information processing apparatus;
sending out first information from the first information processing apparatus toward the second information processing apparatus according to the result of the access authentication;
sending out information added with the first information from the second information processing apparatus to the third information processing apparatus;
determining the first information at the third information processing apparatus; and
permitting the use of the third information processing apparatus by the second information processing apparatus based on the result of the determination.

12. The authentication method according to claim 11, wherein the first information is an encryption key; and
the second information processing apparatus sends out information encrypted with the encryption key to the third information processing apparatus.

13. An authentication method in an information processing apparatus serving as a first information processing apparatus which authenticates access from a second information processing apparatus to a third information processing apparatus, the method comprising the steps of:
receiving a request to access the third information processing apparatus, from the second information processing apparatus;
authenticating the access by the second information processing apparatus in response to the access request;
receiving information about the second information processing apparatus from the second information processing apparatus authenticated to make access; and
notifying the information received from the second information processing apparatus, from the information processing apparatus to the third information processing apparatus.

14. An authentication method in an information processing apparatus serving as a first information processing apparatus which authenticates access from a second information processing apparatus to a third information processing apparatus, the method comprising the steps of:
receiving a request to access the third information processing apparatus, from the second information processing apparatus;
authenticating the access by the second information processing apparatus in response to the access request; and
sending information indicating authentication state to the second information processing apparatus authenticated to make access.

15. The authentication method according to claim 14, wherein the information indicating the authentication state is an encryption key.

16. An information processing apparatus serving as a first information processing apparatus which authenticates access from a second information processing apparatus to a third information processing apparatus, the information processing apparatus comprising:
means which receives a request to access the third information processing apparatus, from the second information processing apparatus;
means which authenticates the access to the third information processing apparatus by the second information processing apparatus when receiving the access request;
means which receives, from the second information processing apparatus authenticated to make access, information about the second information processing apparatus; and
means which notifies the information received from the second information processing apparatus to the third information processing apparatus.

17. An information processing apparatus serving as a first information processing apparatus which authenticates access from a second information processing apparatus to a third information processing apparatus, the information processing apparatus comprising:
means which receives a request to access the third information processing apparatus, from the second information processing apparatus;
means which authenticates access to the third information processing apparatus by the second information processing apparatus when receiving the access request; and
means which notifies information indicating authentication state to the second information processing apparatus authenticated to make access.

18. The information processing apparatus according to claim 17, wherein the means which notifies the information is configured to notify an encryption key to the second information processing apparatus.

19. An access processing method in an information processing apparatus serving as a first information processing apparatus which accepts access by a second information processing apparatus, the method comprising the steps of:
receiving first information related to the second information processing apparatus from a third information processing apparatus;
receiving second information related to the second information processing apparatus from the second information processing apparatus;
determining correspondence relation between the first information and the second information; and
accepting the access from the second information processing apparatus according to the result of the correspondence relation determination.

20. An authentication method in an information processing apparatus, the method comprising the steps of:
connecting the information processing apparatus to a first information processing apparatus;
sending out a request to access a second information processing apparatus to the first information processing apparatus;
sending out information about the information processing apparatus to the first information processing apparatus based on access authentication by the first information processing apparatus performed in response to the access request;
connecting to the second information processing apparatus;
sending out information about the information processing apparatus to the second information processing apparatus; and
accessing the second information processing apparatus in response to permission of use of the second information processing apparatus by the second information processing apparatus given based on the information sent out to the second information processing apparatus.
